(19)

Europäisches
Patentamt
European
Patent Office
Office européen
des brevets

(11)  **EP 2 056 247 A1**

(12)  **EUROPEAN PATENT APPLICATION**

(43) Date of publication:
**06.05.2009  Bulletin 2009/19**

(51) Int Cl.:
***G06Q 30/00*** (2006.01)    ***H04L 29/08*** (2006.01)

(21) Application number: **07291318.9**

(22) Date of filing: **02.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventors:
• **Kisel, Andrey**
**Maidenhead**
**Berkshire SL6 8HD (GB)**

• **Robinson, David Cecil**
**Aldbourne**
**Wiltshire SN8 2NP (GB)**
• **Schutte, Tiaan**
**2252 BV  Voorschoten (NL)**

(74) Representative: **MERH-IP**
**Matias Erny Reichl Hoffmann**
**Paul-Heyse-Strasse 29**
**80336 München (DE)**

Remarks:
Amended claims in accordance with Rule 137(2) EPC.

(54)  **Guaranteed quality multimedia service over managed peer-to-peer network or NGN**

(57)    The proposed invention relates to methods and systems for guaranteed quality multimedia service over managed peer-to-peer networks (also known as super peer-to-peer, sP2P, networks).

A managed peer-to-peer network (1) for providing a guaranteed quality multimedia service is disclosed. The network comprises at least one caching node (3) for caching multimedia data segments; an edge caching node (4) for serving a user equipment (2) with multimedia data; and an admission logic (5) for checking whether a service request from the user equipment (2) is admitted for a required quality of service, wherein only service requests resulting in media sessions for which the required quality of service can be guaranteed are admitted.

Alcatel Lucent

Fig.1

**Description**

The proposed invention relates to methods and systems for guaranteed quality multimedia service over managed peer-to-peer networks (also known as super peer-to-peer, sP2P, networks).

Open P2P networks, e.g. based on the Internet, are emerging as alternative delivery mechanisms for traditional Internet protocol television (IPTV) services, such as content on-demand (CoD), broadcast TV (bTV), push CoD. Traditional IPTV services have been typically delivered over closed operator provided networks. However, Internet based sP2P networks cannot provide at present production level quality of service (QoS) for on-demand, real-time multimedia services.

Typical sP2P networks provide caching servers enabling fast access to frequently requested web pages or files. Caching servers (or caching overlays) are common with Internet service providers (ISPs), enabling efficient access to frequently visited web sites. Similarly, multimedia caching servers are being considered to speed-up access to frequently requested multimedia assets and reduce the network overload. However, existing approaches provide 'best effort' quality of service and are not well suited for the needs of IP-based on-demand multimedia services. This is because caching servers are used for distribution of non real-time web pages, files, as well as the underlined architecture, and are not adopted for time sensitive multimedia deliveries, often requiring high bandwidth.

There are two groups of known solutions aiming at improving quality and speed of multimedia asset distribution over the Internet. The first group of solutions improves the speed of non real-time distribution for media and software assets. It uses a traditional caching model, where content is cached in overlay servers providing scalability, but provides only 'best effort' download speed. The second group of solutions started to emerge recently and is directed to deliver IPTV services such as CoD, bTV. One prior art solution is Akamai's EdgeSuite Streaming (AESS). AESS is close to the traditional model of distributed video on-demand (VoD) streaming. Life broadcast or media on-demand content streams are delivered over the Internet to a set of caching edges. The caching edges are located close to the end users and used to serve the requested content. This prior art solution for on-demand service downloads a stream from storage and transfers it reliably to the streaming servers at the edges of the Internet before streaming begins to the user equipment. The AESS solution is an application of the tradition distributed video streaming to the open Internet network. There is no guaranteed quality of service and the best effort approach is used. Moreover, since the stream has to be downloaded to the selected edge server, it cannot guarantee real-time services until the download is, at least partially, completed.

For life broadcast services, the above prior art solution sends multiple copies of the same stream over different routes from an entry point to the optimal edge streaming servers over the Internet. While potentially providing some improvement, the underlined approach is still best-effort and quality of service cannot be guaranteed. The drawback of the 'sending multiple copies of the same stream over different routes' solution is that multiple high bandwidth copies consume significant amount of resources and scaling up requires exponential infrastructure upgrades.

A common drawback of all known prior art is that it only provides best effort service over public networks, where quality of service cannot be guaranteed.

The proposed invention proposes a method to provide guaranteed quality on-demand multimedia service over open (or closed) sP2P networks and can be incorporated into next generation networks (NGN).

The invention discloses a method for providing a guaranteed quality multimedia service on a managed peer-to-peer network, comprising the steps of: receiving, from a user equipment, a media service request indicating a required quality of service for a media session; determining whether the multimedia service request is admitted for the required quality of service; and admitting the media service request only if the required quality of service can be guaranteed for the media session. The required quality of service can either explicitly be indicated or implicitly. For example, if user requests a movie, then the required QoS can be determined from the movie encoded bit-rate.

The proposed method provides guaranteed quality on-demand multimedia services over IP (e.g. Internet) sP2P network and enables quality of service (QoS) in sP2P network. It is compliant and can be included into the emerging Next Generation Networks (NGN) framework.

According to one aspect of the invention, admission control is introduced to the cached overlay network (sP2P network). Only sessions for which quality of service can be predicatively guaranteed as discussed below are admitted. 'Un-admitted' sessions can either be offered best effort service or denied.

Admission control may be based on a cost metric, e.g. bandwidth availability on the network and out of the caching nodes. However, the invention is not limited to a particular admission matrix for sP2P networks.

According to another aspect of the invention, sP2P admission control is coupled with resource reservation and control to reserve underlying delivery resources for admitted sessions. For instance, the Resource Admission and Control Sub-system (RACS) of NGN can be used. RACS is defined by ETSI TISPAN NGN Release 1 and Release2 and contains a set of standard interfaces which NGN network providers can implement to enable resources reservation.

In the present application, a broad meaning is applied to the term of 'delivery resource reservation'. For instance in a complex scenario, various network parts can be reserved (using sequential or over-lapping forward planning) at different times to assemble required multimedia segments from different locations. The reservation can be applied to any parts of the network. Preferably the reservation is applied intelligently: reserve only networks parts which are needed for the time when they are needed to collect the content segments from one or multiple locations.

According to an embodiment of the invention, a two step solution is applied: On the first step, only new sessions meeting a cost metric are considered for the admission to the sP2P overlay network. On the second step, sP2P reserves delivery resources for the admitted sessions and confirms guaranteed quality of service (QoS).

The delivery resource reservation may not be atomic. As discussed above, different network parts at different times and locations may be reserved, and there may be times where no delivery resources are reserved. A preferred condition is that the combined service meets on-demand multimedia requirements, e.g.

- it arrives at a rate greater or equal than the asset encoded bit-rate for real-time delivery;
- it arrives at an aggregated rate which will guarantee asset availability at an indicated future time.

Other on-demand multimedia requirements are possible and may be applied to embodiments of the invention.

According to another aspect, a managed peer-to-peer network for providing a guaranteed quality multimedia service is provided. The network comprises at least one caching node for caching multimedia data segments; an edge caching node for serving a user equipment with multimedia data; and an admission logic for checking whether a service request from the user equipment is admitted for a required quality of service. Only service requests resulting in media sessions for which the required quality of service can be guaranteed are admitted to the managed peer-to-peer network.

The present invention can enable production quality multimedia services (CoD, bTV, push CoD, and others) over public Internet. The present invention allows multiple service levels over the Internet, e.g. best effort for free content and guaranteed quality for high value assets. It improves the efficiency of sP2P networks while not requiring multiple stream copies as discussed in the prior art.

The objects and features of the invention will become apparent from the description of preferred embodiments. The present invention is described in the following by referring to exemplary embodiments illustrated schematically in the accompanying figures, wherein

> Fig. 1 illustrates a network architecture according to an embodiment of the invention for a guaranteed quality sP2P multimedia service; and

> Fig. 2 shows an example resource reservation map.

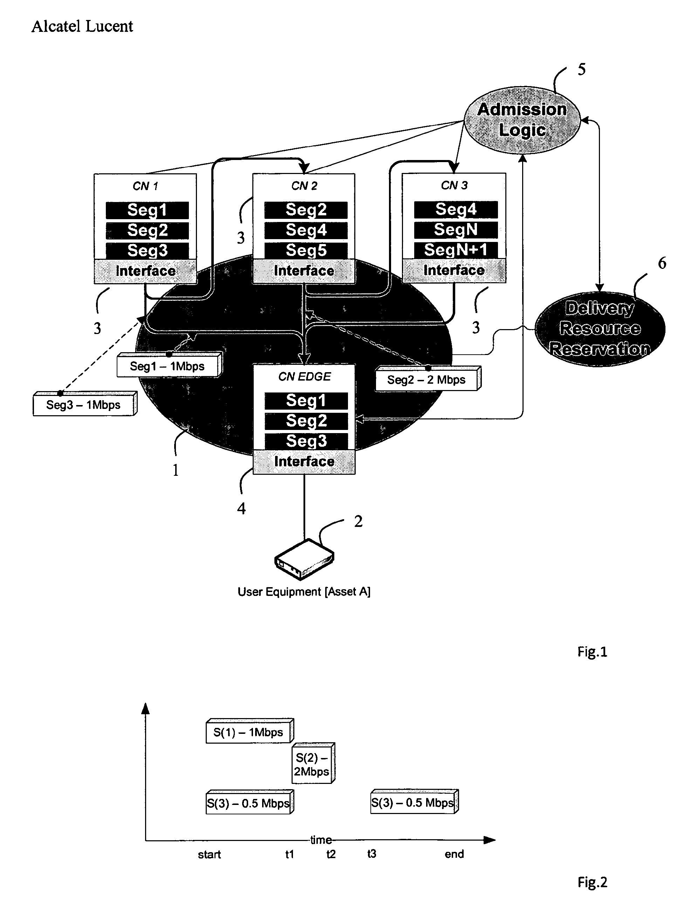

An embodiment of the invention is presented in Fig. 1 which shows schematically a sP2P network 1 (e.g. based on the Internet) comprising several caching nodes 3 (CN - 1, 2, 3) and an edge caching node 4 (CN EDGE) serving a user equipment 2 (UE), e.g. an IPTV set top box (STB). The sP2P network has admission logic 5 and delivery resource reservation 6.

When the UE 2 requests media asset A consisting of three segments

$$Asset\ A = \{Seg_1, Seg_2, Seg_3\},$$

the edge caching node 4, before accepting the delivery request, checks with the admission logic 5 that the request can be admitted for the required QoS. The admission logic 5 can be co-located with the edge node 4, centrally located or distributed over multiple locations.

The admission logic process, as discussed above, may contain several steps. On the first step, the admission logic 5 may check that:

- there are sufficient delivery resources between the edge cache 4 and the UE 2; and/or
- all segments of the requested asset are available in sP2P 1 and their 'delivery to' or 'pulling by' the edge cache 4 meets the cost matrix.

The simplest example of the cost matrix is the available bandwidth. For instance, the required segment is on a caching node and the network resources can be reserved between the caching node and the edge cache. Extra level of complexity is to factor geographical location of the caching nodes and distance to the edge cache. Extra level of complexity is to factor current load of the intermediate caching nodes in the path. Different combinations of cost measures for consideration in the cost matrix are possible.

For example, the cost matrix to pull the segment *SegX to* the edge cache 4 in a simple case may use a route cost algorithm analyzing the available bandwidth from the caching nodes 3 on the route to deliver *SegX,* the link bandwidth between the nodes, and the number of caching nodes 3 as follows:

$$Path = \underset{among\ paths}{MIN} \left\{ P \sum_{i=1}^{P} \left( 1 - \frac{CN\_BW_{left\ i}}{CN\_BW_{total\ i}} \right) \left( 1 - \frac{L\_BW_{left\ i}}{L\_BW_{total\ i}} \right) \right\},$$

where

$P$ - is the number of caching nodes on the route for $SegX$ to the edge cache,
$CN\_BW_{left\ i}$ - is the bandwidth left in the $i$-th caching node if $SegX$ is being delivered,
$CN\_BW_{total\ i}$ - is the total bandwidth of the $i$-th caching node,
$L\_BW_{left\ i}$ - is the link bandwidth left between the $i$-th and the next caching node if $SegX$ is being delivered,
$L\_BW_{total\ i}$ - is the total link bandwidth between the $i$-th and the next caching node.

As a generic example, the above formula considers a case (see previous comment) where a segment is not available on the edge cache 4 and has to be copied through several intermediate caching nodes to reach the edge cache 4. All possible routes are considered. The first part of the product under the sum sign 'weights' down the nodes with least load and the second path of the product 'weights' down the nodes with the most available bandwidth. The minimal product of two weights represents the best choice.

Other cost matrixes can be applied, e.g. using weighted coefficients to prioritize admission for high value assets during the peak load. In addition to the two 'weights' discussed above, a 'weight' coefficient reflecting a value of the asset can be introduced, e.g. into the product under the sum sign. This coefficient can 'weigh down' high value asses (e.g. premier movies) thus ensuring that they get preferential treatment (distribution). This is just an example. Other combinations, factors and equations can be applied, e.g. equations based on maximum rather than minimum weight.

Assuming the admission logic makes a positive decision at the first step and decides that $Seg1$ and $Seg3$ should be delivered from $CN1$ while $Seg2$ from $CN2$ (see Fig. 1).

Fig. 1 shows, e.g., "Seg1 - 1Mbps" which means that the admission logic determined that there is bandwidth to distribute $Seg1$ from $CN1$ at 1 Mb/s. This may be because the segment is being proactively distributed from other nodes, or because the admission logic wants to retain some link resources from $CN1$ to serve other requests. $Seg2$ and $Seg3$ are readily available at $CN1$ as well. $Seg2$ is not available at $CN3$, it is available at $CN2$ and only can be distributed at a small time window [t1, t2] where $CN2$ has not yet committed link bandwidth to other activities. The admission logic builds the distribution schedule for three segments and reserves the network resources as shown on Fig. 2.

On the second step, the admission logic then:

- forward plans and reserves resources between the end point for the duration of the segment retrieval;
- instructs the edge cache where and when to pull the segments.

Delivery resource reservation unit 6 provides physical interfaces to reserve network resources; the intelligence to build the reservation schedule is in the admission logic 5. The matching business model is that NGN network providers expose RACS interfaces and service providers deploy guaranteed QoS admission logic e.g. IPTV services. In a generic case, resource reservation is something provided by the NGN network operator - shown as separate block 6 on the Fig. 1. Admission control and caching overlays can be provided by service providers: blocks 3 and 5 on Fig. 1.

An example resource reservation map for the segment pulling of the above example is shown at Fig. 2.

It is important to notice, that the proposed solution does not require any bit-rate control or enforcement by the caching nodes. The caching nodes may saturate the link bandwidth The enforcement is done by the delivery resource reservation (e.g. RACS) guaranteeing minimum bandwidth, when a pulling or pushing node attempts to saturate the link.

If more bandwidth is available, the segment download can finish earlier and the edge node can notify the admission logic that the reservation is no longer required to free the resources.

Summarizing, the present invention has the following advantages:

- it enables guaranteed production quality multimedia services (CoD, bTV, push CoD, other) over public Internet;

- it allows multiple service levels for high value assets;

- it allows new revenue generation models for Telecom operators in the open Internet networks by providing either overlay networks or delivery resource reservation;

- it optimizes resource usage as only required segments are cached and terminated 'in-progress' sessions can immediately release a resource;

- it avoids wasting bandwidth by transmitting multiple copies of the same media stream to streaming servers;

- it improves the efficiency of sP2P networks.

The present invention may be implemented in many different ways in hardware and/or software. Embodiments may include network entities such as caching nodes, edge caching nodes, admission logic components, delivery resource reservation components and/or user equipments.

**Claims**

1.  Managed peer-to-peer network (1) for providing a guaranteed quality multimedia service, comprising:

    at least one caching node (3) for caching multimedia data segments;
    an edge caching node (4) for serving a user equipment (2) with multimedia data; and
    an admission logic (5) for checking whether a service request from the user equipment (2) is admitted for a required quality of service,
    wherein only service requests resulting in media sessions for which the required quality of service can be guaranteed are admitted.

2.  Network of claim 1, wherein the admission logic (5) comprises a cost metric analysis unit to determine whether the delivery of multimedia data segments associated with a service request meets cost requirements.

3.  Network of claim 1, further comprising resource reservation and control means (6) to reserve network delivery resources for admitted sessions.

4.  Method for providing a guaranteed quality multimedia service on a managed peer-to-peer network (1), comprising the steps:

    receiving, from a user equipment (2), a media service request indicating a required quality of service for a media session;
    determining whether the multimedia service request is admitted for the required quality of service; and
    admitting the media service request only if the required quality of service can be guaranteed for the media session.

5.  Method of claim 4, wherein the media service request is denied or offered best effort service in case the required quality of service can be guaranteed.

6.  Method of claim 4, comprising
    determining whether sufficient delivery resources exist between an edge cache node (4) and the user equipment (2) for the requested media session.

7.  Method of claim 4, comprising
    calculating a cost matrix for determining the costs involved with pulling a requested media segment to an edge cache node (4) serving the user equipment (2).

8.  Method of claim 7, wherein the cost matrix is calculated by applying a route cost algorithm considering the available bandwidth on different paths from caching nodes (3) to the edge cache node (4).

9.  Method of claim 7, wherein the cost matrix is calculated by applying a route cost algorithm considering the link bandwidth between nodes on paths from caching nodes (3) to the edge cache node (4).

10. Method of claim 4, comprising
    reserving network resources for the delivery of requested media segments so that the requested media session meets on-demand multimedia requirements.

11. Method of claim 10, wherein the on-demand multimedia requirements comprise an media segment arrival rate at the user equipment (2).


**Amended claims in accordance with Rule 137(2) EPC.**

1. Managed peer-to-peer network (1) for providing a guaranteed quality multimedia service, comprising:

at least one caching node (3) for caching multimedia data segments;
an edge caching node (4) for serving a user equipment (2) with multimedia data;
an admission logic (5) for checking whether a service request from the user equipment (2) is admitted for a required quality of service,

wherein only service requests resulting in media sessions for which the required quality of service can be guaranteed are admitted; and
resource reservation and control means (6) to reserve network delivery resources for admitted sessions.

2. Network of claim 1, wherein the admission logic (5) comprises a cost metric analysis unit to determine whether the delivery of multimedia data segments associated with a service request meets cost requirements.

3. Method for providing a guaranteed quality multimedia service on a managed peer-to-peer network (1), comprising the steps:

caching multimedia data segments for a media session in at least one caching node (3):

receiving, from a user equipment (2), a media service request indicating a required quality of service for the media session;
determining whether the multimedia service request is admitted for the required quality of service;
admitting the media service request only if the required quality of service can be guaranteed for the media session;
reserving network resources for the delivery of the requested media segments so that the requested media session meets on-demand multimedia requirements; and
serving the user equipment (2) with multimedia data from an edge caching node (4).

4. Method of claim 3, wherein the media service request is denied or offered best effort service in case the required quality of service cannot be guaranteed.

5. Method of claim 3, comprising
determining whether sufficient delivery resources exist between the edge cache node (4) and the user equipment (2) for the requested media session.

6. Method of claim 3, comprising
calculating a cost matrix for determining the costs involved with pulling a requested media segment to an edge cache node (4) serving the user equipment (2).

7. Method of claim 6, wherein the cost matrix is calculated by applying a route cost algorithm considering the available bandwidth on different paths from the at least one caching node (3) to the edge cache node (4).

8. Method of claim 6, wherein the cost matrix is calculated by applying a route cost algorithm considering the link bandwidth between nodes on paths from the at least one caching node (3) to the edge cache node (4).

9. Method of claim 3, wherein the on-demand multimedia requirements comprise a media segment arrival rate at the user equipment (2).

Alcatel Lucent

Fig.1

Fig.2

**EUROPEAN SEARCH REPORT**

Application Number

EP 07 29 1318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/190615 A1 (PANWAR SHIVENDRA S [US] ET AL) 24 August 2006 (2006-08-24) * abstract * * paragraphs [0005] - [0007], [0044], [0045], [0115], [0117], [0131], [0134]; figures 2,3,13 * ----- | 1-11 | INV. G06Q30/00 H04L29/08 |
| A | US 2004/103437 A1 (ALLEGREZZA FRED J [US] ET AL) 27 May 2004 (2004-05-27) * abstract * * paragraphs [0001] - [0014]; figures 1,3 * ----- | 1-11 | |
| A | WO 03/087997 A (AKAMAI TECH INC [US]) 23 October 2003 (2003-10-23) * pages 1-9 * ----- | 1-11 | |
| | | | TECHNICAL FIELDS SEARCHED (IPC) G06Q H04L |

The present search report has been drawn up for all claims

| Place of search | Date of completion of the search | Examiner |
|---|---|---|
| Munich | 16 October 2008 | Hackl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 07 29 1318

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2008

| Patent document cited in search report | | Publication date | Patent family member(s) | | Publication date |
|---|---|---|---|---|---|
| US 2006190615 | A1 | 24-08-2006 | NONE | | |
| US 2004103437 | A1 | 27-05-2004 | AU | 2003287725 A1 | 18-06-2004 |
| | | | CA | 2532424 A1 | 10-06-2004 |
| | | | EP | 1570671 A2 | 07-09-2005 |
| | | | WO | 2004049717 A2 | 10-06-2004 |
| WO 03087997 | A | 23-10-2003 | AU | 2003230868 A1 | 27-10-2003 |
| | | | EP | 1493093 A2 | 05-01-2005 |

EPO FORM P0459